(19) Europäisches Patentamt
European Patent Office
Office européen des brevets

(11) **EP 4 765 281 A1**

(12) **EUROPEAN PATENT APPLICATION**
published in accordance with Art. 153(4) EPC

(43) Date of publication:
**24.06.2026 Bulletin 2026/26**

(21) Application number: **24908158.9**

(22) Date of filing: **20.12.2024**

(51) International Patent Classification (IPC):
*H01M 10/052* (2010.01)     *H01M 10/0566* (2010.01)
*H01M 4/70* (2006.01)     *H01M 50/538* (2021.01)
*H01M 50/533* (2021.01)

(52) Cooperative Patent Classification (CPC):
**H01M 4/70; H01M 10/052; H01M 10/0566;
H01M 50/533; H01M 50/538;** Y02E 60/10;
Y02P 70/50

(86) International application number:
**PCT/KR2024/020825**

(87) International publication number:
**WO 2025/135876 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 KR 20230189913
19.12.2024 KR 20240191909**

(71) Applicant: **LG Energy Solution, Ltd.
Seoul 07335 (KR)**

(72) Inventors:
• **PARK, Ji Young**
  **Daejeon 34122 (KR)**
• **SHIN, Won Kyung**
  **Daejeon 34122 (KR)**
• **CHOI, Jin Yi**
  **Daejeon 34122 (KR)**
• **KIM, Jung Jin**
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LITHIUM SECONDARY BATTERY**

(57)     The present invention relates to a lithium secondary battery including: an electrode assembly including a positive electrode, a negative electrode, and a separator disposed between the positive electrode and the negative electrode; an electrolyte including a lithium salt and an organic solvent; and a battery case accommodating the electrode assembly and the electrolyte, wherein a Y value defined by Equation 1 is in a range of 0.15 to 0.30, and a method of preparing the same.

[FIG. 5]

**Description**

**TECHNICAL FIELD**

The present invention relates to a lithium secondary battery, and more particularly, to a lithium secondary battery which is designed so that battery specifications and a gas composition, a residual amount of an electrolyte, a solvent composition, and discharge capacity in the secondary battery after formation satisfy a specific condition.

**BACKGROUND ART**

Demand for lithium secondary batteries as an energy source has been significantly increased with technological advances in electric vehicles and portable electronic devices.

The lithium secondary battery may be classified into cylindrical type, prismatic type, and pouch type batteries depending on a shape of a battery case, wherein, after a jelly-roll-type electrode assembly, which is prepared by sequentially stacking sheet-shaped positive electrode, separator, and negative electrode and then winding it in one direction, is accommodated in a cylindrical battery case, the cylindrical type battery among them is formed in a sealed form by covering an upper portion of the battery case with a cap plate. The positive electrode and the negative electrode are provided with strip-shaped positive electrode tab and negative electrode tab, respectively, and the positive electrode tab and the negative electrode tab are respectively connected to electrode terminals to be electrically connected to an external power source. For reference, the positive electrode terminal is the cap plate, and the negative electrode terminal is the battery case.

Conventionally, small cylindrical type secondary batteries with a form factor of 1865 (cylindrical type secondary battery with a diameter of 18 mm $\times$ a height of 65 mm) or 2170 (cylindrical type secondary battery with a diameter of 21 mm $\times$ a height of 70 mm) were mainly used, but, in recent years, as electric vehicles are required to have increased driving ranges and faster charging rates, development and use of a large cylindrical type secondary battery represented by a larger form factor, for example, 4680 (cylindrical type secondary battery with a diameter of 46 mm $\times$ a height of 80 mm), are being considered.

Since the large cylindrical type secondary battery has large capacity, there is a problem in that, when the strip-shaped electrode tabs are used as in the conventional small cylindrical type secondary battery, an amount of current concentrated on the electrode tabs is increased to increase resistance and heat generation and reduce current collection efficiency. Accordingly, a so-called tab-less cylindrical type secondary battery is being proposed in which current collectors themselves of non-coating portions of the positive electrode and the negative electrode are utilized as electrode tabs instead of using the separate strip-shaped electrode tabs.

The cylindrical type secondary battery having a tab-less structure may not only exhibit relatively large capacity characteristics and energy density, but also has an advantage of increasing production efficiency of the cylindrical type secondary battery for an electric vehicle and reducing its production unit price. Also, since the tab-less structure is used to increase an electrical connection (contact) area between the electrode tab and the electrode terminal and reduce a movement distance of electrons while the number of parts is reduced, output characteristics are improved and heat generated during charge and discharge processes may also be dispersed.

However, with respect to the large cylindrical type secondary battery using the tab-less structure, since a process of pressing a portion where an active material layer was not coated was performed in order to provide sufficient weldability with the case and a terminal portion, the electrolyte did not move properly due to blocking of an electrolyte movement path between the positive electrode, the separator, and the negative electrode in the wound electrode assembly, and thus, electrolyte wetting is reduced, and, as a result, components of a solid electrolyte interphase (SEI) layer formed during a formation process are changed and a decomposition reaction of an electrolyte solvent increases during battery operation. Thus, it is difficult to achieve desired electrochemical performance when applying the same electrolyte system as that of the conventional small cylindrical type secondary battery to the large cylindrical type secondary battery.

Therefore, there is a need to develop a technique which may achieve excellent electrochemical performance in a large-sized cylindrical type secondary battery that is applicable to medium- and large-sized devices such as automobiles.

**DISCLOSURE OF THE INVENTION**

**TECHNICAL PROBLEM**

An aspect of the present invention provides a lithium secondary battery which may achieve excellent electrochemical performance by being designed so that battery specifications and a gas composition, a residual amount of an electrolyte, a solvent composition, and discharge capacity in the secondary battery after formation satisfy a specific condition.

## TECHNICAL SOLUTION

[1] The present invention provides a lithium secondary battery including: an electrode assembly including a positive electrode, a negative electrode, and a separator disposed between the positive electrode and the negative electrode; an electrolyte including a lithium salt and an organic solvent; and a battery case accommodating the electrode assembly and the electrolyte,

wherein the organic solvent includes dimethyl carbonate, and
a Y value defined by Equation 1 is in a range of 0.15 to 0.30.

[Equation 1]

$$ Y = \frac{1}{FF} \times \frac{E}{V_{CH4}} \times \frac{r_{DMC}}{C} $$

In Equation 1,
FF is a ratio of a diameter to a height of the battery case,
E is a residual amount of the electrolyte which is measured in g,
$r_{DMC}$ is a weight ratio of the dimethyl carbonate to a total weight of the solvent in the electrolyte,
$V_{CH4}$ is a volume of $CH_4$ gas present in the lithium secondary battery which is measured in mL, and
C is discharge capacity measured in Ah when the lithium secondary battery is charged and discharged at 0.5 C in a range of 2.5 V to 4.2 V,
wherein Y is a dimensionless number.

[2] The present invention provides the lithium secondary battery of [1] above, wherein a ratio of the volume of the $CH_4$ gas to a total volume of gas present in the lithium secondary battery is in a range of 0.40 to 0.80.
[3] The present invention provides the lithium secondary battery of [1] or [2] above, wherein the residual amount of the electrolyte is in a range of 25 g to 32 g.
[4] The present invention provides the lithium secondary battery of at least one of [1] to [3] above, wherein, when the lithium secondary battery is charged and discharged at 0.5 C in the range of 2.5 V to 4.2 V, the discharge capacity is in a range of 10 Ah to 50 Ah.
[5] The present invention provides the lithium secondary battery of at least one of [1] to [4] above, wherein the weight ratio of the dimethyl carbonate to the total weight of the solvent in the electrolyte is in a range of 0.60 to 0.90.
[6] The present invention provides the lithium secondary battery of at least one of [1] to [5] above, wherein the electrolyte includes at least one additive selected from the group consisting of vinylene carbonate, 1,3-propane sultone, succinonitrile, and methyl propargyl carbonate.
[7] The present invention provides the lithium secondary battery of at least one of [1] to [6] above, wherein the lithium secondary battery is a cylindrical type battery having a form factor ratio, which is the ratio of the diameter to the height of the battery case, of 0.4 or more.
[8] The present invention provides the lithium secondary battery of at least one of [1] to [7] above, wherein the lithium secondary battery is a 46110 cell, a 48110 cell, a 4880 cell, or a 4680 cell.
[9] The present invention provides the lithium secondary battery of at least one of [1] to [8] above, wherein the lithium secondary battery includes a non-coating portion in which an active material layer is not formed on at least a portion of the positive electrode and the negative electrode, and the positive electrode non-coating portion or the negative electrode non-coating portion is defined as an electrode tab.
[10] The present invention provides the lithium secondary battery of [9] above, wherein the positive electrode non-coating portion and the negative electrode non-coating portion are formed along a winding direction of the electrode assembly on one side ends of the positive electrode and the negative electrode, respectively, a current collecting plate is bonded to each of the positive electrode non-coating portion and the negative electrode non-coating portion, and the current collecting plate is connected to an electrode terminal.
[11] The present invention provides the lithium secondary battery of [9] or [10] above, wherein the positive electrode non-coating portion and the negative electrode non-coating portion are processed in a form of a plurality of independently bendable segments, and at least a portion of the plurality of segments is bent toward a winding center of the electrode assembly.

[12] The present invention provides the lithium secondary battery of [11] above, wherein the at least a portion of the plurality of bent segments is overlapped on an upper end and a lower end of the electrode assembly, and the current collecting plate is bonded to the overlapped plurality of segments.

[13] The present invention provides a battery pack including the lithium secondary battery of at least one of [1] to [12] above.

## ADVANTAGEOUS EFFECTS

A lithium secondary battery according to the present invention is designed so that specifications and capacity, an amount of an electrolyte solution injected, a ratio of DMC in an organic solvent, and a volume of $CH_4$ in a cell after formation satisfy a specific condition, and this means that a stable film is formed on an electrode by an oxidation/reduction reaction during charge and discharge processes.

Thus, the lithium secondary battery according to the present invention is one in which performance degradation due to decomposition and regeneration of the electrode film and decomposition of the organic solvent in an electrolyte is minimized, and may exhibit excellent life characteristics even if it is a large cylindrical type battery or battery having a tab-less structure with relatively low electrolyte wetting.

## BRIEF DESCRIPTION OF THE DRAWINGS

FIG. 1 is a view illustrating a stacked state before winding of an electrode assembly according to the present invention.
FIG. 2 is a cross-sectional view illustrating a structure of an electrode plate of an electrode assembly according to an embodiment of the present invention.
FIG. 3 is a view for explaining a structure of an electrode assembly according to an example of the present invention.
FIG. 4 is a cross-sectional view illustrating a structure of a lithium secondary battery according to an embodiment of the present invention.
FIG. 5 is a cross-sectional view illustrating a structure of a lithium secondary battery according to another embodiment of the present invention.
FIG. 6 is a view for explaining a battery pack according to the present invention.

## MODE FOR CARRYING OUT THE INVENTION

Hereinafter, the present invention will be described in more detail.

In general, in a lithium secondary battery, an SEI (Solid Electrolyte Interphase) layer and a CEI (Cathode Electrolyte Interphase) layer, which are passive films, are formed on surfaces of a negative electrode and a positive electrode as a solvent and an additive, which are contained in an electrolyte, undergo oxidation and reduction reactions on the surfaces of the negative electrode and the positive electrode during a formation process. A hydrocarbon-based gas is mainly generated when forming the negative electrode SEI layer among them, and particularly, $CH_4$ gas is mainly generated when the SEI layer is formed on the negative electrode as an electrolyte solution additive or dimethyl carbonate, as an organic solvent, is decomposed. Specifically, the electrolyte solution additive, such as vinylene carbonate (VC), contributes to the formation of the SEI layer, wherein, if an amount of the additive contributing to the formation of the SEI layer is insufficient, the dimethyl carbonate (DMC) is consumed to form the SEI layer instead. Thus, a large amount of the DMC, which is confirmed after formation, may represent that the SEI layer has been sufficiently formed by the additive. Therefore, a degree of formation of the SEI layer may be estimated by checking a volume of the $CH_4$ gas and a ratio of the DMC present in the battery after the formation.

If an excessively small amount of the SEI layer is formed, since a side reaction between an electrolyte and the surface of the electrode increases, electrode degradation and gas generation are increased to degrade life characteristics, and if an excessively large amount of the SEI layer is formed, there is a problem in that electrode surface resistance is increased. Thus, the SEI layer must be appropriately formed to achieve excellent electrochemical performance of the secondary battery.

An appropriate degree of formation of the SEI layer varies depending on a complex combination of factors such as specifications and capacity of the battery, wherein the reason for this is that electrolyte wetting and reaction surface area vary depending on a type of the battery. Since the degree of formation of the SEI layer varies depending on the complex factors, it has been difficult to determine a correlation between the degree of formation of the SEI layer and performance of the secondary battery.

However, as a result of continuous research conducted by the present inventors, the present inventors have found that a new parameter Y, which reflects battery specifications and a gas composition, a residual amount of an electrolyte, a solvent composition, and discharge capacity in a secondary battery after formation, may represent the degree of formation of the SEI layer, and, in a case in which the Y value satisfies a specific range, electrochemical performance of a secondary battery, especially a large battery or a battery having a tab-less structure with low electrolyte wetting, is significantly improved.

Specifically, a lithium secondary battery according to the present invention includes: an electrode assembly including a positive electrode, a negative electrode, and a separator disposed between the positive electrode and the negative electrode; an electrolyte including a lithium salt and an organic solvent; and a battery case accommodating the electrode assembly and the electrolyte, wherein the organic solvent includes dimethyl carbonate, and a Y value defined by Equation 1 below may be in a range of 0.15 to 0.30, preferably 0.15 to 0.25, and more preferably 0.15 to 0.23.

[Equation 1]

$$Y = \frac{1}{FF} \times \frac{E}{V_{CH4}} \times \frac{r_{DMC}}{C}$$

In Equation 1,

FF is a ratio of a diameter to a height of the battery case,
E is a residual amount of the electrolyte which is measured in g,
$r_{DMC}$ is a weight ratio of the dimethyl carbonate to a total weight of the solvent in the electrolyte,
$V_{CH4}$ is a volume of $CH_4$ gas present in the lithium secondary battery which is measured in mL, and
C is discharge capacity measured in Ah when the lithium secondary battery is charged and discharged at 0.5 C in a range of 2.5 V to 4.2 V,
wherein Y is a dimensionless number.

In a case in which the Y value is less than 0.15, it may mean that an amount of the electrolyte injected does not meet a standard required in the present invention, and since it means that the SEI layer may not be sufficiently formed, it is not desirable. In contrast, in a case in which the Y value is greater than 0.30, it may mean that an excessive amount of the electrolyte is injected, and it is undesirable because it may cause an excessive additive decomposition reaction to degrade cell performance, for example, to increase a gas generation amount in the battery.

Formation in the present invention, for example, may be performed by charging at 0.2 C to 4.2 V at 25°C and discharging to 2.5 V. Specifically, the formation may be performed by charging at 0.2 C to 3.8 V at 25°C, storing at 60°C for 12 hours, then charging again to 4.2 V at 25°C and discharging to 2.5 V.

The volume of the $CH_4$ gas, which corresponds to a $V_{CH4}$ value of Equation 1, is a value obtained by measuring the volume of the $CH_4$ gas present in the lithium secondary battery after formation, wherein it may be in a range of 4.0 mL to 11.0 mL, preferably 4.5 mL to 10.0 mL, and more preferably 4.8 mL to 9.3 mL. Also, a ratio ($V_{CH4}/V_{total}$) of the volume of the $CH_4$ gas to a total volume of gas present in the lithium secondary battery after the formation may be in a range of 0.40 to 0.80, preferably 0.44 to 0.70, and more preferably 0.60 to 0.67. The fact that the ratio of the $CH_4$ gas satisfies the above range may be an indicator showing that the SEI layer is appropriately formed on the negative electrode. The volume of the $CH_4$ gas may be measured by analyzing gas captured in a cell using a GC-TCD (gas chromatography-thermal conductivity detector).

The residual amount of the electrolyte, which corresponds to an E value of Equation 1, is a value obtained by measuring an amount of the electrolyte present in the lithium secondary battery after the formation, wherein it may be in a range of 25 g to 32 g. Since a portion of an electrolyte solution is consumed during a formation process, the residual amount of the electrolyte may be about 75% to 85% of an amount of the electrolyte solution injected. The residual amount of the electrolyte may be measured through NMR (Nuclear Magnetic Resonance spectroscopy) analysis. Specifically, the electrolyte is extracted from the lithium secondary battery and diluted in acetone, and an internal standard may then be added to confirm an absolute content through the NMR analysis.

Also, qualitative analysis of a composition in the electrolyte is also possible by using GC/MS (Gas Chromatography/Mass Spectrometry) and relative content analysis using NMR.

The weight ratio of the dimethyl carbonate (DMC), which corresponds to a $r_{DMC}$ value of Equation 1, is a value representing the weight ratio of the DMC to the total weight of the solvent in the electrolyte when the total weight of the solvent in the electrolyte present in the lithium secondary battery after the formation is set to 1, wherein it may be in a range of 0.60 to 0.90, preferably 0.65 to 0.85, and more preferably 0.70 to 0.80. The weight ratio of the dimethyl carbonate may be measured through relative content analysis using an NMR signal intensity ratio. A portion of the DMC is decomposed into DMDOHC (dimethyl 2,5-dioxahexane dicarboxylate) by a high-temperature process during the formation, but since the DMC is not consumed in the formation of the SEI layer in the lithium secondary battery of the present invention as described above, a significant amount may remain in a form of DMC as described above.

With respect to the discharge capacity corresponding to a C value of Equation 1, the discharge capacity (C), which is measured when the lithium secondary battery is charged and discharged at 0.5 C in a range of 2.5 V to 4.2 V after the formation, specifically, which is measured by charging the lithium secondary battery at 0.5 C to 4.2 V under constant current-constant voltage (CC-CV) conditions at 25°C and then discharging it at a constant power (CP) of 19.1 W to 2.5 V, may be in a range of 10 Ah to 50 Ah, preferably 15 Ah to 40 Ah, and more preferably 20 Ah to 30 Ah.

The FF in Equation 1 is r/h, which is a ratio of a diameter to a height of the battery case when the height is h and the diameter is r, and this is called a form factor ratio. The FF may be 0.4 or more, preferably, 0.4 to 0.6.

That is, the lithium secondary battery may be a cylindrical type battery having a form factor ratio of 0.4 or more, preferably, 0.4 to 0.6.

The cylindrical type battery according to the present invention, for example, may be a 46110 cell (diameter 46 mm, height 110 mm, form factor ratio 0.418), a 48110 cell (diameter 48 mm, height 110 mm, form factor ratio 0.436), a 4880 cell (diameter 48 mm, height 80 mm, form factor ratio 0.600), or a 4680 cell (diameter 46 mm, height 80 mm, form factor ratio 0.575). In a number representing a form factor, first two numbers represent the diameter of the cell, and next two or three numbers represent the height of the cell.

The lithium secondary battery satisfying the Y value of Equation 1 of 0.15 to 0.30 may be prepared by appropriately adjusting the electrolyte composition according to a shape of the battery case, a shape of the electrode assembly, and battery capacity.

Specifically, a method of preparing a lithium secondary battery according to the present invention includes the steps of: preparing an electrode assembly including a positive electrode, a negative electrode, and a separator disposed between the positive electrode and the negative electrode, and inserting the electrode assembly into a battery case and injecting 30 g to 45 g of an electrolyte.

The electrolyte may include a lithium salt; an organic solvent including dimethyl carbonate (DMC); and at least one additive selected from the group consisting of vinylene carbonate (VC), 1,3-propane sultone (PS), succinonitrile (SN), and methyl propargyl carbonate.

The organic solvent may include 60 wt% to 90 wt% of dimethyl carbonate based on a total weight of the organic solvent.

Next, each component of the lithium secondary battery according to the present invention will be described in more detail.

The lithium secondary battery according to the present invention includes an electrolyte; an electrode assembly including a positive electrode, a negative electrode, and a separator; and a battery case accommodating the electrode assembly and the electrolyte.

**Electrolyte**

The electrolyte according to the present invention includes a lithium salt and an organic solvent.

Any lithium salt typically used in an electrolyte solution for a lithium secondary battery may be used as the lithium salt without limitation, and specifically, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF^-$, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as an anion.

Specifically, the lithium salt may be at least one selected from the group consisting of $LiPF_6$, $LiClO_4$, $LiBF_4$, lithium bis(fluorosulfonyl)imide (LiFSI), lithium bis(trifluoromethanesulfonyl)imide (LiTFSI), lithium bis(pentafluoroethanesulfonyl)imide (LiBETI), lithium trifluoromethanesulfonate ($LiSO_3CF_3$), lithium difluorophosphate ($LiPO_2F_2$), lithium bis(oxalato)borate (LiBOB), lithium difluoro(oxalato)borate (LiFOB), lithium difluoro(bisoxalato)phosphate (LiDFOP), lithium tetrafluoro(oxalato)phosphate (LiTFOP), and lithium fluoromalonato(difluoro)borate (LiFMDFB), and may preferably be $LiPF_6$.

In an embodiment of the present invention, a concentration of the lithium salt in a non-aqueous organic solution containing the lithium salt and the organic solvent may be in a range of 0.5 M to 4.0 M, specifically 0.5 M to 3.0 M, and more specifically 1.2 M to 2.0 M. When the concentration of the lithium salt is within the above range, since effects of improving low-temperature output and improving cycle characteristics may be sufficiently secured while preventing an excessive increase in viscosity and surface tension, appropriate electrolyte wetting may be obtained.

As the organic solvent, various organic solvents commonly used in a lithium electrolyte may be used together with dimethyl carbonate (DMC). For example, the organic solvent may further include a cyclic carbonate-based solvent, a linear carbonate-based solvent, a linear ester-based solvent, a cyclic ester-based solvent, a nitrile-based solvent, or a mixture thereof, and may preferably be a mixture of a cyclic carbonate-based solvent and a linear carbonate-based solvent including DMC. The mixture of the cyclic carbonate-based solvent and the linear carbonate-based solvent is desirable in terms of increasing ionic conductivity of the electrolyte.

The linear carbonate-based solvent is an organic solvent having low viscosity and low permittivity, wherein at least one selected from the group consisting of diethyl carbonate (DEC), dipropyl carbonate, ethyl methyl carbonate (EMC), methylpropyl carbonate, and ethylpropyl carbonate may be used together in addition to dimethyl carbonate (DMC). An electrolyte solution additive, especially, vinylene carbonate (VC) mainly contributes to the formation of the SEI layer, wherein if an amount of the additive contributing to the formation of the SEI layer is insufficient, DMC is consumed to form the SEI layer instead. Thus, a large amount of the DMC, which is confirmed after formation, may represent that the SEI layer has been sufficiently formed by the additive.

The cyclic carbonate-based solvent may well dissociate the lithium salt in the electrolyte due to high permittivity as a highly viscous organic solvent, wherein the cyclic carbonate-based solvent may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and preferably, may be ethylene carbonate (EC) or propylene carbonate (PC) or a mixture thereof.

The linear ester-based solvent may be at least one selected from the group consisting of methyl acetate, ethyl acetate, propyl acetate, methyl propionate, ethyl propionate, propyl propionate, and butyl propionate, and may preferably be methyl propionate, ethyl propionate, or propyl propionate.

The cyclic ester-based solvent may be at least one selected from the group consisting of $\gamma$-butyrolactone, $\gamma$-valerolactone, $\gamma$-caprolactone, $\sigma$-valerolactone, and $\epsilon$-caprolactone.

The nitrile-based solvent may be at least one selected from the group consisting of succinonitrile, acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may preferably be succinonitrile.

The electrolyte may include at least one additive selected from a cyclic carbonate-based compound, a sultone-based compound, a sulfate-based compound, a phosphorus-based compound, a nitrile-based compound, an amine-based compound, a silane-based compound, a benzene-based compound, and a lithium salt-based compound, if necessary.

The cyclic carbonate-based compound may be at least one selected from the group consisting of vinylene carbonate (VC), vinyl ethylene carbonate (VEC), fluoroethylene carbonate (FEC), and methyl propargyl carbonate, and may specifically be vinylene carbonate.

The sultone-based compound is a material capable of forming a stable SEI layer by a reduction reaction on the surface of the negative electrode, wherein the sultone-based compound may be at least one compound selected from the group consisting of 1,3-propane sultone (PS), 1,4-butane sultone, ethane sultone, prop-1-en-1,3-sultone (PRS), 1,4-butene sultone, and 1-methyl-1,3-propene sultone, and may specifically be 1,3-propane sultone (PS) or prop-1-en-1,3-sultone (PRS).

The sulfate-based compound is a material capable of forming a stable SEI layer that does not crack even during high-temperature storage by being electrically decomposed on the surface of the negative electrode, wherein the sulfate-based compound may be at least one selected from the group consisting of ethylene sulfate (Esa), trimethylene sulfate (TMS), or methyl trimethylene sulfate (MTMS).

The phosphorus-based compound may be a phosphate-based or phosphite-based compound, and specifically, may be at least one selected from the group consisting of tris(trimethylsilyl)phosphate, tris(trimethylsilyl)phosphite, tris(2,2,2-trifluoroethyl)phosphate, and tris(trifluoroethyl)phosphite.

The nitrile-based compound may be at least one selected from the group consisting of succinonitrile (SN), adiponitrile (ADN), acetonitrile, propionitrile, butyronitrile, valeronitrile, caprylonitrile, heptannitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl) ether (ASA3), 1,3,6-hexane tricarbonitrile (HTCN), 1,4-dicyano 2-butene (DCB), and 1,2,3-tris(2-cyanoethyl)propane (TCEP).

The amine-based compound may be at least one selected from the group consisting of triethanolamine and ethylenediamine, and the silane-based compound may be tetravinylsilane.

The benzene-based compound may be at least one selected from the group consisting of monofluorobenzene, difluorobenzene, trifluorobenzene, and tetrafluorobenzene.

The lithium salt-based compound is a compound different from the lithium salt included in the non-aqueous electrolyte solution, wherein the lithium salt-based compound may be at least one compound selected from the group consisting of lithium difluorophosphate (LiDFP; $LiPO_2F_2$), lithium bisoxalatoborate (LiBOB; $LiB(C_2O_4)_2$), lithium tetra-

fluoroborate (LiBF$_4$), lithium tetraphenylborate, lithium difluoro(oxalato)borate (LiDFOB), and lithium difluoro(bisoxalato) phosphate (LiDFOP).

Preferably, at least one additive selected from the group consisting of vinylene carbonate (VC), 1,3-propane sultone (PS), succinonitrile (SN), and methyl propargyl carbonate may be included as an additive contributing to the formation of the SEI layer.

A total weight of the additive may be in a range of 3 wt% to 7 wt%, preferably, 4 wt% to 6 wt% based on a total weight of the electrolyte.

In a case in which the additive contributing to the formation of the SEI layer is not sufficiently included, the amount of the electrolyte injected itself increases to compensate for this, and, in this case, the Y value is greater than 0.30, and it may lead to a degradation of cell performance, for example, the gas generation amount is increased due to a side reaction in the cell.

A remainder excluding the amounts of the lithium salt and the additive in the electrolyte may all be the organic solvent unless otherwise stated.

## Electrode Assembly

The electrode assembly according to the present invention includes a positive electrode, a negative electrode, and a separator disposed between the positive electrode and the negative electrode.

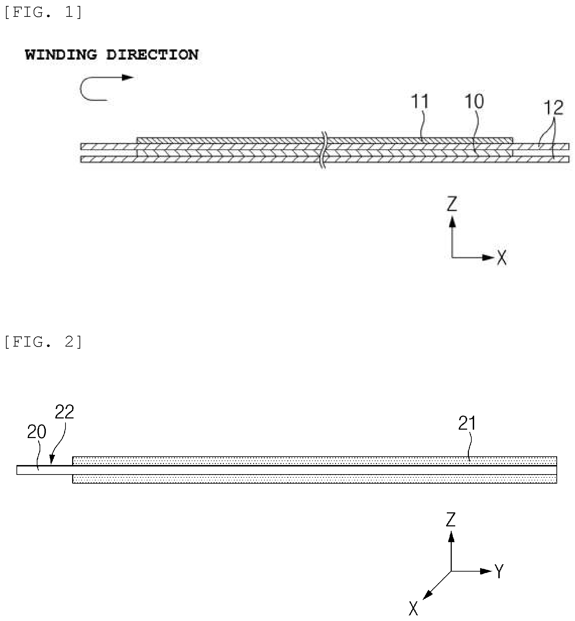

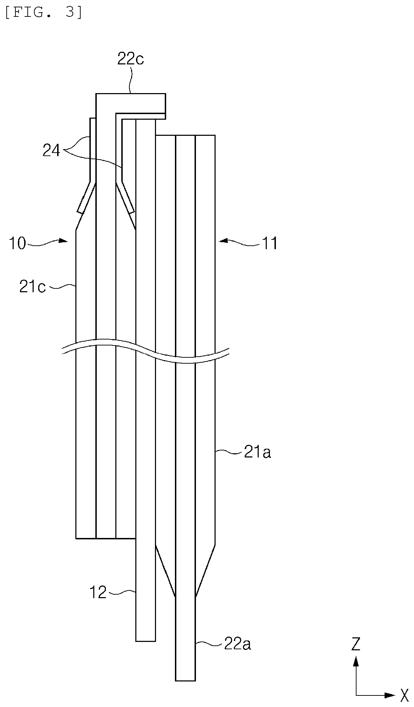

A stacked structure before winding of an electrode assembly according to an embodiment of the present invention is illustrated in FIG. 1, a cross-sectional structure of an electrode plate (positive electrode or negative electrode) according to an embodiment of the present invention is illustrated in FIG. 2, and a structure of the electrode assembly according to the embodiment of the present invention is illustrated in FIG. 3.

Referring to FIGS. 1 and 2, an electrode assembly of the present invention may be prepared by winding a stack, which is formed by sequentially stacking a separator 12, a positive electrode 10, a separator 12, and a negative electrode 11 at least once in one direction X.

In this case, the positive electrode 10 and the negative electrode 11 each have a structure in which an active material layer 21 is formed on a long sheet-shaped current collector 20, and may include a non-coating portion 22 in which the active material layer 21 is not formed in a partial region of the current collector 20.

If the positive electrode 10 and the negative electrode 11, which include the non-coating portion 22 as described above, are used, a battery having a tap-less structure, in which a separate electrode tab is not included and at least a portion of the non-coating portions of the positive electrode 10 and the negative electrode 11 defines an electrode tab, may be achieved.

Specifically, the non-coating portion 22 may be formed long along the winding direction X on one side end of the current collector 20, and may function as the electrode tab by bonding a current collecting plate to each of the non-coating portion of the positive electrode and the non-coating portion of the negative electrode and connecting the current collecting plate to an electrode terminal.

For example, a battery, in which a positive electrode non-coating portion and a negative electrode non-coating portion function as electrode tabs, may be prepared through the following method. First, the separator, the positive electrode, the separator, and the negative electrode are sequentially stacked such that the non-coating portion of the positive electrode and the non-coating portion of the negative electrode are disposed in opposite directions to each other and then wound in one direction to prepare a jelly-roll-type electrode assembly. Then, after bending the non-coating portions of the positive electrode and the negative electrode toward a winding center C, current collecting plates are welded and bonded to the non-coating portion of the positive electrode and the non-coating portion of the negative electrode, respectively, and a battery is prepared by connecting the current collecting plates to the electrode terminals. Since the current collecting plate has a larger cross-sectional area than a strip-type electrode tab and resistance is inversely proportional to a cross-sectional area of a passage through which current flows, cell resistance may be significantly reduced when a secondary battery is formed in the above-described structure.

The positive electrode non-coating portion and the negative electrode non-coating portion may be processed in a form of a plurality of independently bendable segments, and at least a portion of the plurality of segments may be bent toward the winding center C of the electrode assembly.

The segments may be formed by processing the current collectors of the positive electrode and the negative electrode through a metal foil cutting process such as laser notching, ultrasonic cutting, and punching.

In a case in which the non-coating portions of the positive electrode and the negative electrode are processed in the form of the plurality of segments, deformation or damage of the non-coating portions may be prevented by reducing stress that is applied to the non-coating portions during bending, and welding characteristics with the current collecting plate may be improved.

The current collecting plate and the non-coating portion are generally bonded by welding, wherein, in order to improve the welding characteristics, a strong pressure must be applied to a welding region of the non-coating portion to bend the non-coating portion as flat as possible. However, a shape of the non-coating portion may be irregularly distorted and deformed during this bending process, and the deformed portion may contact the electrode of opposite polarity to cause an internal short circuit or cause micro-cracks in the non-coating portion. However, if the non-coating portions of the positive electrode and the negative electrode are processed in the form of the plurality of independently bendable segments, the stress applied to the non-coating portions during bending is mitigated so that the deformation and damage of the non-coating portions may be minimized.

Also, in a case in which the non-coating portion is processed in the form of segments as described above, an overlap occurs between the plurality of segments during bending, and, as a result, welding strength with respect to the current collecting plate is increased and a problem, in which, when the latest technique, such as laser welding, is used, a laser beam penetrates into the electrode assembly to ablate the separator or the active material, may be prevented. Preferably, at least a portion of the plurality of bent segments may be overlapped on an upper end and a lower end of the electrode assembly, and the current collecting plate may be bonded to the overlapped plurality of segments.

As illustrated in FIG. 3, the electrode assembly according to the present invention may be formed in a structure in which an insulation layer 24 is additionally formed on the positive electrode 10. Specifically, the insulation layer 24 may be formed to cover a portion of a positive electrode active material layer and a portion of the non-coating portion along a direction parallel to the winding direction of the electrode assembly.

With respect to a battery having a tab-less structure in which a non-coating portion 22c of the positive electrode 10 and a non-coating portion 22a of the negative electrode 11 are used as electrode tabs, an electrode assembly is formed such that the positive electrode 10 protrudes above the separator 12 and the negative electrode 11 protrudes below the separator 12, and the protruding positive electrode 10 and/or negative electrode 11 are bent and then bonded to the current collecting plate. In a case in which the positive electrode 10 or the negative electrode 11 is bent as described above, the current collector of the positive electrode 10 or the negative electrode 11 crosses the separator and is disposed close to the electrode having an opposite polarity, and, as a result, there is a possibility that the positive electrode and the negative electrode are electrically contacted to cause an internal short circuit. However, as illustrated in FIG. 3, in a case in which the insulation layer 24 covering the portions of the positive electrode active material layer and the non-coating portion is formed, since the electrical contact between the positive electrode 10 and the negative electrode 11 may be prevented by the insulation layer 24, occurrence of a short circuit in the battery may be prevented.

Preferably, the insulation layer 24 may be provided on at least one side of the current collector of the positive electrode 10, and preferably, may be provided on both sides of the positive electrode 10.

Also, the insulation layer 24 may be formed in a region of the positive electrode 10 which may face an active material layer 21a of the negative electrode 11. For example, on a surface of the non-coating portion 22c of the positive electrode 10 which faces the negative electrode 11 after being bent, the insulation layer 24 may be formed by extending to an end of the non-coating portion 22c. However, with respect to a surface opposite to the surface facing the negative electrode 11 after being bent, it is desirable that the insulation layer 24 is formed only on a portion of the non-coating portion 22c, for example, before a bending point of the non-coating portion 22c. The reason for this is that, in a case in which the insulation layer 24 is formed on an entire region of the non-coating portion of the surface opposite to the surface facing the negative electrode 11, since an electrical contact with the current collecting plate is not possible, it may not function as the electrode tab.

The insulation layer 24 may be used as long as it may be attached to the positive electrode while ensuring insulation performance, and a material or component thereof is not particularly limited. For example, the insulation layer may be an insulation coating layer or an insulation tape, and the insulation coating layer may include an organic binder and inorganic particles. In this case, the organic binder, for example, may be a styrene-butadiene rubber (SBR), and the inorganic particles may be alumina oxide, but are not limited thereto.

Next, each component of the electrode assembly of the present invention will be described in more detail.

**Positive Electrode**

The positive electrode may be prepared by a method in which a positive electrode slurry is applied to one side or both sides of a long sheet-shaped positive electrode collector, a solvent of the positive electrode slurry is removed through a drying process, and rolling is performed. A positive electrode including a non-coating portion may be prepared by a method in which the positive electrode slurry is not applied to a partial region of the positive electrode collector, for example, one end of the positive electrode collector when the positive electrode slurry is applied.

As the positive electrode collector, various positive electrode collectors used in the art may be used. For example, as the positive electrode collector, stainless steel, aluminum, nickel, titanium, fired carbon, or aluminum or stainless steel that is surface-treated with one of carbon, nickel, titanium, silver, or the like may be used. The positive electrode collector may typically have a thickness of 3 $\mu$m to 500 $\mu$m, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a non-woven fabric body, and the like.

Also, the positive electrode slurry may be prepared by dispersing the positive electrode active material in a solvent such as dimethyl sulfoxide (DMSO), isopropyl alcohol, N-methylpyrrolidone (NMP), acetone, or water.

Positive electrode active materials commonly used in the art may be used as the above positive electrode active material, and types thereof are not particularly limited.

Preferably, the positive electrode active material may include a lithium transition metal oxide containing nickel (Ni) and cobalt (Co), and may more preferably include a lithium nickel-based oxide represented by [Formula 1] below.

$$[\text{Formula 1}] \qquad Li_aNi_bCo_cM^1_dM^2_eO_2$$

In Formula 1,

$M^1$ is manganese (Mn), aluminum (Al), or a combination thereof,
$M^2$ is at least one selected from the group consisting of zirconium (Zr), tungsten (W), yttrium (Y), barium (Ba), calcium (Ca), titanium (Ti), magnesium (Mg), tantalum (Ta), and niobium (Nb),
a, b, c, d, and e satisfy $0.8 \leq a \leq 1.2$, $0.50 < b < 1$, $0 < c < 0.50$, $0 < d < 0.50$, and $0 \leq e \leq 0.1$, respectively, and $b+c+d+e=1$.
$M^1$ may preferably be Mn or Mn and Al.

The element $M^2$ is not necessarily included, but, in a case in which it is included in an appropriate amount, it may play a role in promoting grain growth during sintering or improving crystal structure stability.

a represents a molar ratio of lithium in the lithium nickel-based oxide, wherein a may satisfy $0.8 \leq a \leq 1.2$, $0.85 \leq a \leq 1.15$, or $0.9 \leq a \leq 1.2$. When the molar ratio of the lithium satisfies the above range, a crystal structure of the lithium nickel-based oxide may be stably formed.
b represents a molar ratio of nickel among total metals excluding lithium in the lithium nickel-based oxide, wherein b may satisfy $0.50 < b < 1$, $0.60 \leq b < 1$, $0.80 \leq b < 1$, $0.85 \leq b < 1$, or $0.9 \leq b < 1$.
c represents a molar ratio of cobalt among the total metals excluding lithium in the lithium nickel-based oxide, wherein c may satisfy $0 < c < 0.50$, $0 < c < 0.40$, $0 < c < 0.20$, $0 < c < 0.15$, or $0 < c < 0.10$. When the molar ratio of the cobalt satisfies the above range, good resistance characteristics and output characteristics may be achieved.
d represents a molar ratio of element $M^1$ among the total metals excluding lithium in the lithium nickel-based oxide, wherein d may satisfy $0 < d < 0.50$, $0 < d < 0.40$, $0 < d < 0.20$, $0 < d < 0.15$, or $0 < d < 0.10$. When the molar ratio of the element $M^1$ satisfies the above range, the structural stability of the positive electrode active material is excellent.
e represents a molar ratio of element $M^2$ among the total metals excluding lithium in the lithium nickel-based oxide, wherein e may satisfy $0 \leq e \leq 0.1$ or $0 \leq e \leq 0.05$.

Specifically, the lithium nickel-based oxide may be $Li(Ni_{0.60}Co_{0.10}Mn_{0.30})O_2$, $Li(Ni_{0.60}Co_{0.20}Mn_{0.20})O_2$, $Li(Ni_{0.80}Co_{0.10}Mn_{0.10})O_2$, $Li(Ni_{0.90}Mn_{0.05}Co_{0.05})O_2$, $Li[Ni_{0.93}Co_{0.05}Mn_{0.02}]O_2$, $Li(Ni_{0.94}Co_{0.04}Mn_{0.02})O_2$, $Li(Ni_{0.87}Mn_{0.07}Co_{0.04}Al_{0.02})O_2$, or $Li(Ni_{0.90}Mn_{0.03}Co_{0.05}Al_{0.02})O_2$, but is not limited thereto.

The positive electrode slurry may optionally further include at least one of a conductive agent and a binder.

The conductive agent is used to provide conductivity to the electrode, wherein any conductive agent may be used without particular limitation as long as it has electron conductivity without causing chemical changes in the battery. Specific examples of the conductive agent may be graphite such as natural graphite or artificial graphite; carbon black such as acetylene black, Ketjen black, channel black, furnace black, lamp black, and thermal black; a carbon-based structure such as carbon fibers and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the positive electrode active material layer.

The binder improves adhesion between the positive electrode active material particles and adhesion between the positive electrode active material and the positive electrode collector, wherein specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

**Negative Electrode**

The negative electrode may be prepared by a method in which a negative electrode slurry is applied to one side or both sides of a long sheet-shaped negative electrode collector, a solvent of the negative electrode slurry is removed through a drying process, and rolling is performed. A negative electrode including a non-coating portion may be prepared by a method in which the negative electrode slurry is not applied to a partial region of the negative electrode collector, for example, one end of the negative electrode collector when the negative electrode slurry is applied.

As the negative electrode collector, negative electrode collectors commonly used in the art may be used, and, for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

Also, the negative electrode slurry may be prepared by dispersing the negative electrode active material in a solvent such as dimethyl sulfoxide (DMSO), isopropyl alcohol, N-methylpyrrolidone (NMP), acetone, and water.

A carbon-based negative electrode active material used in the art may be used as the negative electrode active material, and in addition, a silicon-based negative electrode active material may be mixed with the carbon-based negative electrode active material and used as the negative electrode active material.

As the carbon-based active material, various carbon-based materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based material is not particularly limited, and materials of various shapes, such as an irregular shape, planar shape, flaky shape, spherical shape, or fibrous shape, may be used.

Also, the silicon-based negative electrode active material may include at least one selected from the group consisting of silicon (Si), silicon carbide (SiC), silicon chloride, silicon oxide (SiO$_k$, where 0<k<2), and a Si-Y$_1$ alloy (where Y$_1$ is an element selected from the group consisting of alkali metal, alkaline earth metal, a Group 13 element, a Group 14 element, transition metal, a rare earth element, and a combination thereof, and is not Si). The element Y$_1$ may be selected from the group consisting of Mg, Ca, strontium (Sr), Ba, radium (Ra), scandium (Sc), Y, Ti, Zr, hafnium (Hf), rutherfordium (Rf), vanadium (V), Nb, Ta, dubnium (Db), chromium (Cr), molybdenum (Mo), W, seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), germanium (Ge), phosphorus (P), arsenic (As), antimony (Sb), bismuth (Bi), sulfur (S), selenium (Se), tellurium (Te), polonium (Po), and a combination thereof.

The carbon-based negative electrode active material and the silicon-based negative electrode active material may be included in a weight ratio of 99:1 to 95:10, preferably 99:1 to 95:5, and more preferably 97:3 to 95:5 in the negative electrode slurry.

In a case in which the mixing ratio of the carbon-based negative electrode active material to the silicon-based negative electrode active material satisfies the above range, since volume expansion of the silicon-based compound is suppressed while capacity characteristics are improved, excellent cycle performance may be ensured. In a case in which an amount of the silicon (Si)-based compound is excessively small, since it is difficult to increase the energy density, it is difficult to increase the capacity of the battery, and, in a case in which the amount of the silicon (Si)-based compound is excessively large, it is not desirable because a degree of volume expansion of the negative electrode may be increased.

The negative electrode slurry may optionally further include at least one of a conductive agent and a binder.

The conductive agent is used to provide conductivity to the negative electrode, wherein any conductive agent may be used without particular limitation as long as it has electron conductivity without causing chemical changes in the battery. Specific examples of the conductive agent may be graphite such as natural graphite or artificial graphite; carbon black such as acetylene black, Ketjen black, channel black, furnace black, lamp black, and thermal black; a carbon-based structure such as carbon fibers and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the negative electrode active material layer.

The binder improves adhesion between the negative electrode active material particles and adhesion between the negative electrode active material and the negative electrode collector, wherein specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

**Separator**

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

**Lithium Secondary Battery**

Next, a lithium secondary battery according to the present invention will be described.

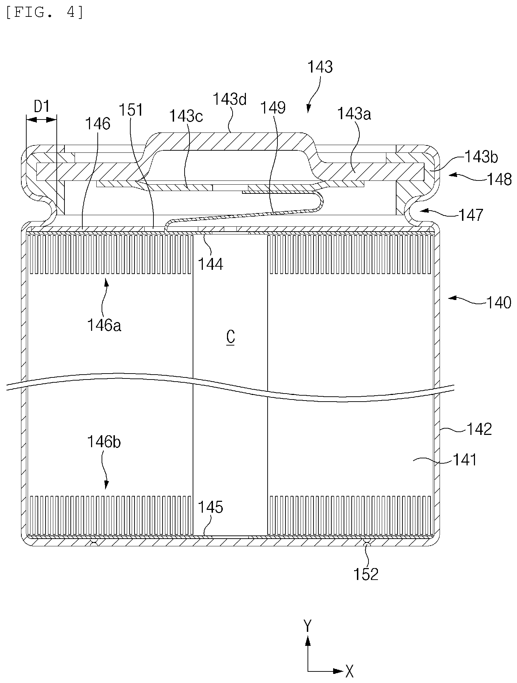

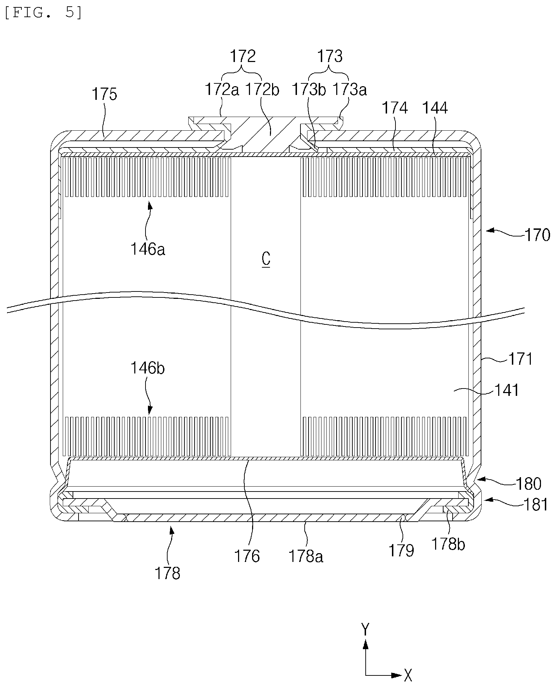

Examples of the lithium secondary battery according to the present invention are disclosed in FIGS. 4 and 5. Hereinafter, the lithium secondary battery according to the present invention will be described with reference to FIGS. 4 and 5. However, FIGS. 4 and 5 only show one embodiment of the present invention, and a structure of the battery of the present invention is not limited to the scope disclosed in FIGS. 4 and 5.

A cross-sectional view of a lithium secondary battery having a tab-less structure according to an embodiment of the present invention is illustrated in FIG. 4.

Referring to FIG. 4, a lithium secondary battery 140 according to the present invention includes an electrode assembly 141, a battery case 142 in which the electrode assembly 141 and an electrolyte (not shown) are accommodated, and a sealing body 143 sealing an open end of the battery case 142.

In this case, the electrode assembly may be one in which a stack of a positive electrode, a separator, and a negative electrode is wound in one direction. Also, the positive electrode and the negative electrode of the electrode assembly each include a non-coating portion on which an active material layer is not formed, and may be stacked and wound such that the positive electrode non-coating portion and the negative electrode non-coating portion are disposed at the upper end and the lower end of the electrode assembly, respectively. Since the electrode assembly has been described above, only components other than the electrode assembly will be described below.

The battery case 142 is a can-type container having an upper opening, wherein it is formed of a conductive metallic material such as aluminum or steel. The battery case accommodates the electrode assembly 141 in an inner space through the upper end opening and also accommodates the electrolyte (not shown) together.

It is desirable that the lithium secondary battery 140 of the present invention does not include a current interruption device (CID).

As illustrated in FIG. 4, the battery case 142 is electrically connected to a non-coating portion 146b of the negative electrode, and may function as a negative electrode terminal that contacts an external power source to transfer a current applied from the external power source to the negative electrode.

If necessary, a beading portion 147 and a crimping portion 148 may be included at an upper end of the battery case 142. The beading portion 147 may be formed by pressing an outer circumferential surface of the battery case 142 to a distance D1. The beading portion 147 prevents the electrode assembly 141 accommodated inside the battery case 142 from escaping through the upper end opening of the battery case 142, and may function as a support on which the sealing body 143 is stably placed.

The crimping portion 148 may be formed on an upper portion of the beading portion 147 and has an extended and bent shape to surround an outer circumferential surface of a cap plate 143a disposed on the beading portion 147 and a portion of an upper surface of the cap plate 143a.

Next, the sealing body 143 is for sealing the open end of the battery case 142, wherein it includes the cap plate 143a and a first gasket 143b providing airtightness between the cap plate 143a and the battery case 142 and having insulation properties, and, if necessary, may further include a connection plate 143c electrically and mechanically bonded to the cap plate 143a. The cap plate 143a may be pressed onto the beading portion 147 formed in the battery case 142 and may be fixed by the crimping portion 148.

The cap plate 143a is a component formed of a conductive metallic material, wherein it covers the upper end opening of the battery case 142. The cap plate 143a is electrically connected to the positive electrode of the electrode assembly 141, and is electrically insulated from the battery case 142 through the first gasket 143b. Thus, the cap plate 143a may function as a positive electrode terminal of the cylindrical type secondary battery. The cap plate 143a may include a protrusion 143d protruding upward from the center C, and the protrusion 143d may contact an external power source to allow a current to be applied from the external power source.

The first gasket 143b may be disposed between the cap plate 143a and the crimping portion 148 to secure airtightness of the battery case 142 and to electrically insulate the battery case 142 and the cap plate 143a.

The lithium secondary battery 140 according to the present invention may further include current collecting plates 144 and 145, if necessary. The current collecting plates are respectively bonded to a non-coating portion 146a of the positive electrode and the non-coating portion 146b of the negative electrode, and connected to the electrode terminals (i.e., the positive electrode terminal and the negative electrode terminal).

Specifically, the cylindrical type battery 140 according to the present invention may include the first current collecting plate 144 bonded to an upper portion of the electrode assembly 141 and the second current collecting plate 145 bonded to a lower portion of the electrode assembly 141.

The first current collecting plate 144 and/or the second current collecting plate 145 may be further included.

The first current collecting plate 144 is bonded to the upper portion of the electrode assembly 141. The first current collecting plate 144 is formed of a conductive metallic material, such as aluminum, copper, and nickel, and is electrically connected to the non-coating portion 146a of the positive electrode. A lead 149 may be connected to the first current collecting plate 144. The lead 149 may extend upward from the electrode assembly 141 and may be bonded to the connection plate 143c or may be directly bonded to a lower surface of the cap plate 143a. The lead 149 and other components may be bonded through welding. Preferably, the first current collecting plate 144 may be formed in one piece with the lead 149. In this case, the lead 149 may have a plate shape extending outward from a center of the first current collecting plate 144.

The first current collecting plate 144 is bonded to an end of the non-coating portion 146a of the positive electrode, and the bonding, for example, may be performed by a method such as laser welding, resistance welding, ultrasonic welding, and soldering.

The second current collecting plate 145 is bonded to the lower portion of the electrode assembly 141. The second current collecting plate 145 is formed of a conductive metallic material, such as aluminum, copper, and nickel, and is electrically connected to the non-coating portion 146b of the negative electrode. One surface of the second current collecting plate 145 may be bonded to the non-coating portion 146b of the negative electrode, and an opposite surface may be bonded to an inner bottom surface of the battery case 142. In this case, the bonding may be performed by a method such as laser welding, resistance welding, ultrasonic welding, and soldering.

The lithium secondary battery 140 according to the present invention may further include an insulator 146, if necessary. The insulator 146 may be disposed to cover an upper surface of the first current collecting plate 144. Since the insulator 146 covers the first current collecting plate 144, a direct contact between the first current collecting plate 144 and an inner circumferential surface of the battery case 142 may be prevented.

The insulator 146 includes a lead hole 151 so that the lead 149 extending upward from the first current collecting plate 144 may be drawn out. The lead 149 is drawn upward through the lead hole 151 and bonded to a lower surface of the connection plate 143c or the lower surface of the cap plate 143a.

The insulator 146 may be formed of an insulating polymer resin, for example, a polymer resin material such as polyethylene, polypropylene, polyimide, or polybutylene terephthalate.

The lithium secondary battery 140 according to the present invention may further include a venting portion 152 formed on the lower surface of the battery case 142, if necessary. The venting portion 152 corresponds to a region having a thinner thickness than a surrounding region in the lower surface of the battery case 142. Since the venting portion 152 is thin, it is structurally weaker than the surrounding region. Thus, if a pressure in the lithium secondary battery 140 is increased to a certain level or higher, the venting portion 152 is ruptured and gas in the battery case 142 may be discharged to the outside to prevent explosion of the battery.

A cross-sectional view of a lithium secondary battery having a tab-less structure according to another embodiment of the present invention is illustrated in FIG. 5.

Referring to FIG. 5, a lithium secondary battery 170 according to another embodiment of the present invention has different structures of battery case and sealing body in comparison to the lithium secondary battery 140 illustrated in FIG. 4 and has substantially the same configurations of electrode assembly and electrolyte.

Specifically, the lithium secondary battery 170 according to the another embodiment of the present invention includes a battery case 171 through which a rivet terminal 172 is installed. The rivet terminal 172 is installed on a closed surface (upper surface in the drawing) partially closed at one end of the battery case 171. The rivet terminal 172 is riveted to a through hole (first opening of a first end) of the battery case 171 in a state in which an insulating second gasket 173 is disposed therebetween. The rivet terminal 172 is exposed to the outside in a direction opposite to a direction of gravity.

The rivet terminal 172 includes a terminal exposed portion 172a and a terminal insertion portion 172b. The terminal exposed portion 172a is exposed to the outside of the closed surface of the battery case 171. The terminal exposed portion 172a may be located at approximately a center of the partially closed surface of the battery case 171. A maximum diameter of the terminal exposed portion 172a may be formed to be greater than a maximum diameter of the through hole formed in the battery case 171. The terminal insertion portion 172b may be electrically connected to the non-coating portion 146a of the positive electrode through approximately the center of the closed surface of the battery case 171. The terminal insertion portion 172b may be riveted on an inner surface of the battery case 171. That is, an end of the terminal insertion portion 172b may have a shape curved toward the inner surface of the battery case 171. A maximum diameter of the end of the terminal insertion portion 172b may be greater than the maximum diameter of the through hole of the battery case 171.

A lower end surface of the terminal insertion portion 172b may be welded to the first current collecting plate 144 connected to the non-coating portion 146a of the positive electrode. An insulating cap 174 formed of an insulating material may be disposed between the first current collecting plate 144 and the inner surface of the battery case 171. The insulating cap 174 covers an upper portion of the first current collecting plate 144 and an upper edge portion of the electrode assembly 141. Thus, it may prevent a short circuit from being caused by contact between an outer circumferential non-coating portion of the electrode assembly 141 and the inner surface of the battery case 171 having a different polarity. The terminal insertion portion 172b of the rivet terminal 172 may pass through the insulating cap 174 to be welded to the first collector plate 144.

The second gasket 173 is disposed between the battery case 171 and the rivet terminal 172 to prevent an electrical contact between the battery case 171 and the rivet terminal 172 which have opposite polarities to each other. Thus, the upper surface having a substantially flat shape of the battery case 171 may function as a positive electrode terminal of the cylindrical type battery 170.

The second gasket 173 includes a gasket exposed portion 173a and a gasket insertion portion 173b. The gasket exposed portion 173a is disposed between the terminal exposed portion 172a of the rivet terminal 172 and the battery case 171. The gasket insertion portion 173b is disposed between the terminal insertion portion 172b of the rivet terminal 172 and the battery case 171. The gasket insertion portion 173b may be closely attached to the inner surface of the battery case 171 by being deformed together during the riveting of the terminal insertion portion 172b. The second gasket 173, for example, may be formed of a polymer resin having insulation properties.

The gasket exposed portion 173a of the second gasket 173 may have an extended shape to cover an outer circumferential surface of the terminal exposed portion 172a of the rivet terminal 172. In a case in which the second gasket 173 covers the outer circumferential surface of the rivet terminal 172, occurrence of a short circuit in a process of bonding an electrical connection component, such as a bus bar, to the upper surface of the battery case 171 and/or to the rivet terminal 172 may be prevented. Although not shown in the drawing, the gasket exposed portion 173a may have an extended shape to cover not only the outer circumferential surface of the terminal exposed portion 172a but also a portion of an upper surface thereof.

In a case in which the second gasket 173 is formed of the polymer resin, the second gasket 173 may be bonded to the battery case 171 and the rivet terminal 172 by heat fusion. In this case, airtightness at a bonding interface between the second gasket 173 and the rivet terminal 172 and at a bonding interface between the second gasket 173 and the battery case 171 may be enhanced. In a case in which the gasket exposed portion 173a of the second gasket 173 has a shape extending to the upper surface of the terminal exposed portion 172a, the rivet terminal 172 may be integrally bonded to the second gasket 173 by insert injection molding.

A region 175 other than regions occupied by the rivet terminal 172 and the second gasket 173 in the upper surface of the battery case 171 corresponds to a negative electrode terminal having a polarity opposite to that of the rivet terminal 172.

A second current collecting plate 176 is bonded to the lower portion of the electrode assembly 141. The second current collecting plate 176 is formed of a conductive metallic material, such as aluminum, steel, copper, and nickel, and is electrically connected to the non-coating portion 146b of the negative electrode.

Preferably, the second current collecting plate 176 is electrically connected to the battery case 171. For this purpose, at least a portion of an edge portion of the second current collecting plate 176 may be fixed by being disposed between the inner surface of the battery case 171 and the first gasket 178b. In one example, the at least a portion of the edge portion of the second current collecting plate 176 may be fixed to a beading portion 180 by welding while being supported on a lower end surface of the beading portion 180 formed at a lower end of the battery case 171. In a modified example, the at least a portion of the edge portion of the second current collecting plate 176 may be directly welded to an inner wall surface of the battery case 171.

The second current collecting plate 176 may have a plurality of irregularities (not shown) which are radially formed on a surface facing the non-coating portion 146b. In a case in which the irregularities are formed, the second current collecting plate 176 may be pressed to press the irregularities into the non-coating portion 146b.

Preferably, the second current collecting plate 176 and an end of the non-coating portion 146b may be bonded by welding, for example, laser welding.

A sealing body 178 sealing a lower open end of the battery case 171 includes a cap plate 178a and a first gasket 178b. The first gasket 178b electrically separates the cap plate 178a and the battery case 171. A crimping portion 181 fixes an edge of the cap plate 178a and the first gasket 178b together. A venting portion 179 is included in the cap plate 178a. A configuration of the venting portion 179 is substantially the same as that of the above-described embodiment.

Preferably, the cap plate 178a is formed of a conductive metallic material. However, since the first gasket 178b is disposed between the cap plate 178a and the battery case 171, the cap plate 178a has no electrical polarity. The sealing body 178 functions to seal the lower open end of the battery case 171 and to discharge gas when an internal pressure of the battery cell 170 is increased above a critical value.

Preferably, the rivet terminal 172 electrically connected to the non-coating portion 146a of the positive electrode is used as the positive electrode terminal. Also, the portion 175 excluding the rivet terminal 172 in the upper surface of the battery case 171, which is electrically connected to the non-coating portion 146b of the negative electrode through the second current collecting plate 176, is used as the negative electrode terminal. As described above, in a case in which the two electrode terminals are disposed on the upper portion of the lithium secondary battery, it is possible to dispose electrical connection components, such as a bus bar, on only one side of the lithium secondary battery 170. This may lead to simplification of a battery pack structure and improvement of energy density. Furthermore, since the portion 175 used as the negative electrode terminal has a substantially flat shape, a sufficient bonding area may be secured for bonding the electrical connection components such as a bus bar. Accordingly, the lithium secondary battery 170 may reduce resistance at a bonding portion of the electrical connection component to a desired level.

In a case in which a lithium secondary battery is formed in a tab-less structure as described above, since the battery having the tab-less structure has less current concentration than a conventional battery having electrode tabs, it may effectively reduce heat generation in the battery, and, accordingly, an effect of improving thermal stability of the battery may be obtained.

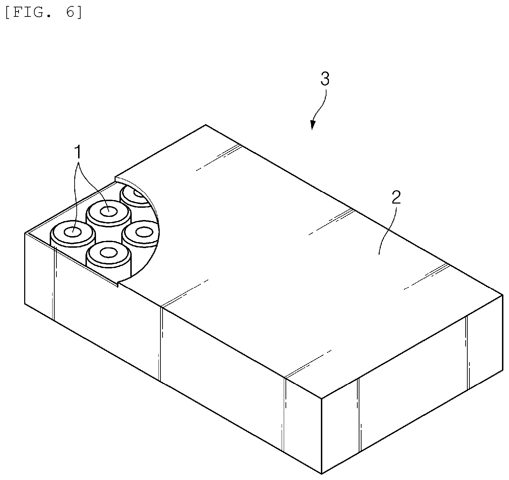

The lithium secondary battery of the present invention as described above may be used as a unit cell to prepare a battery pack. A configuration of a battery pack according to an embodiment of the present invention is schematically illustrated in FIG. 6. Referring to FIG. 6, a battery pack 3 according to an embodiment of the present invention includes an assembly, in which lithium secondary batteries 1 are electrically connected, and a pack housing 2 accommodating the assembly. The lithium secondary battery 1 is the lithium secondary battery according to the above-described embodiment. In the drawing, for convenience of illustration, parts, such as a bus bar for electrically connecting the lithium secondary batteries 1, a cooling unit, and an external terminal, are omitted.

The battery pack 3 may be mounted in a vehicle. The vehicle, for example, may be an electric vehicle, a hybrid vehicle, or a plug-in hybrid vehicle. The vehicle includes a four-wheeled vehicle or a two-wheeled vehicle.

Hereinafter, the present invention will be described in more detail, according to specific examples.

**<Examples: Preparation of Lithium Secondary Batteries>**

**Example 1.**

1) Preparation of Electrolyte

LiPF$_6$ was dissolved in a mixed solvent of ethylene carbonate (EC), ethylmethyl carbonate (EMC), and dimethyl carbonate (DMC) such that a concentration of the LiPF$_6$ was 1.25 M to prepare non-aqueous organic solution. An electrolyte solution was prepared by mixing 3 wt% of vinylene carbonate (VC), 1 wt% of 1,3-propane sultone (PS), 1 wt% of succinonitrile (SN), 0.5 wt% of methyl propargyl carbonate, and the remaining non-aqueous organic solution based on a total weight of the electrolyte solution.

ii) Preparation of Electrode Assembly

A positive electrode slurry was prepared by adding a positive electrode active material, a conductive agent, and a binder to N-methylpyrrolidone at a weight ratio of 97.5:1.0:1.5. In this case, an oxide having a composition of Li[Ni$_{0.93}$Co$_{0.05}$Mn$_{0.02}$]O$_2$ was used as the positive electrode active material, carbon nanotubes were used as the conductive agent, and PVDF was used as the binder.

An aluminum current collector was coated with the positive electrode slurry, dried, and then roll-pressed to prepare a positive electrode.

A negative electrode active material, a conductive agent, and a binder were added to distilled water at a weight ratio of 95.0:3.5:1.5 to prepare a negative electrode slurry. In this case, graphite was used as the negative electrode active material, acetylene black was used as the conductive agent, and a styrene-butadiene rubber (SBR) was used as the binder.

A copper current collector was coated with the negative electrode slurry, dried, and then roll-pressed to prepare a negative electrode.

A polyethylene separator was disposed between the above-prepared positive electrode and negative electrode such that they are stacked in the order of the separator, the positive electrode, the separator, and the negative electrode and then wound to prepare a jelly-roll-type electrode assembly.

iii) Preparation of Lithium Secondary Battery

After the electrode assembly prepared as described above was inserted into a cylindrical battery can having a diameter of 46 mm and a height of 80 mm, the above-prepared electrolyte solution was injected to prepare a 4680 cell. In this case, the electrolyte solution was injected in an amount such that an $E/V_{CH4}$ value of Equation 1 satisfied a value listed in Table 1 below.

**Example 2.**

A 4680 cell was prepared in the same manner as in Example 1 except that the amount of the electrolyte solution injected was increased such that the $E/V_{CH4}$ value was adjusted as in Table 1 below.

**Example 3.**

A 4680 cell was prepared in the same manner as in Example 1 except that the amount of the electrolyte solution injected was increased such that the $E/V_{CH4}$ value was adjusted as in Table 1 below.

**Example 4.**

A 4680 cell was prepared in the same manner as in Example 1 except that the amount of the electrolyte solution injected was increased such that the $E/V_{CH4}$ value was adjusted as in Table 1 below.

**Example 5.**

A 4680 cell was prepared in the same manner as in Example 1 except that the amount of the electrolyte solution injected was increased such that the $E/V_{CH4}$ value was adjusted as in Table 1 below.

**Comparative Example 1.**

A 4680 cell was prepared in the same manner as in Example 1 except that the amount of the vinylene carbonate (VC) was changed to 2 wt% during the preparation of the electrolyte solution and the amount of the electrolyte solution injected was decreased such that the $E/V_{CH4}$ value was adjusted as in Table 1 below.

**Comparative Example 2.**

A 4680 cell was prepared in the same manner as in Example 1 except that the amount of the electrolyte solution injected was increased excessively such that the $E/V_{CH4}$ value was adjusted as in Table 1 below.

**Comparative Example 3.**

A 2170 cell was prepared in the same manner as in Example 1 except that a cylindrical battery can having a diameter of 21 mm and a height of 70 mm was used.

**Comparative Example 4.**

A 2170 cell was prepared in the same manner as in Comparative Example 3 except that the amount of the electrolyte solution injected was increased such that the $E/V_{CH4}$ value was adjusted as in Table 1 below.

**<Experimental Examples>**

**Experimental Example 1. Measurement of E, $r_{DMC}$, $V_{CH4}$, and C**

Each of the cells prepared in the examples and the comparative examples was charged at 0.2 C to 3.8 V at 25°C, stored at 60°C for 12 hours, then charged again to 4.2 V at 25°C, and discharged to 2.5 V to perform a formation process. Next, gas captured in the cell was analyzed using a GC-TCD (gas chromatography-thermal conductivity detector) to measure a volume ($V_{CH4}$) of $CH_4$ gas and a total volume ($V_{total}$) of gas generated.

Also, the electrolyte solution was extracted from each cell subjected to the formation process to confirm a ratio of DMC to a total weight of the solvent remaining after formation and a residual amount of the electrolyte.

Specifically, after the extracted electrolyte solution was diluted in acetone, an internal standard was added, and the residual amount of the electrolyte was measured through NMR analysis.

Furthermore, a ratio of the remaining DMC was calculated through relative content analysis using an NMR signal intensity ratio. Also, the cell after completion of the formation was charged at 0.5 C to 4.2 V under constant current-constant voltage (CC-CV) conditions at 25°C, and then discharged at a constant power (CP) of 19.1 W to 2.5 V to measure discharge capacity C.

Then, the measured $V_{CH4}$, E, $r_{DMC}$, and C were substituted into Equation 1 to obtain a Y value and it was listed in Table 1.

[Table 1]

|  | FF | E/$V_{CH4}$ | $r_{DMC}$ | C [Ah] | Y of Equation 1 |
|---|---|---|---|---|---|
| Example 1 | 0.575 | 2.876404 | 0.75 | 25 | 0.150 |
| Example 2 | 0.575 | 3.180723 | 0.75 | 25 | 0.166 |
| Example 3 | 0.575 | 3.126437 | 0.75 | 25 | 0.163 |
| Example 4 | 0.575 | 4.307692 | 0.75 | 25 | 0.225 |
| Example 5 | 0.575 | 3.945205 | 0.75 | 25 | 0.206 |
| Comparative Example 1 | 0.575 | 2.752688 | 0.75 | 25 | 0.144 |
| Comparative Example 2 | 0.575 | 6.666667 | 0.75 | 25 | 0.348 |
| Comparative Example 3 | 0.3 | 3.942029 | 0.75 | 5 | 1.971 |
| Comparative Example 4 | 0.3 | 4.028369 | 0.75 | 5 | 2.014 |

According to Table 1, with respect to Comparative Example 3 which was a 2170 cell, it may be confirmed that the Y value according to Equation 1 significantly deviated from the range of 0.15 to 0.30 even if Comparative Example 3 used the electrolyte solution having the same composition as Example 1.

**Experimental Example 2. Cell Performance Check**

(1) Initial Resistance (DCIR) Measurement

Each of the cells prepared in the examples and the comparative examples was charged at 0.2 C to 3.8 V at 25°C, stored at 60°C for 12 hours, charged again to 4.2 V at 25°C, and then discharged to 2.5 V to perform a formation process. Next, each cell was fully charged to a state of charge (SOC) of 100% by being charged (0.05 C cut off) at 0.5 C (rated capacity 1C = 25,000 mAh/g) to 4.2 V under CC-CV conditions at 25°C. A voltage drop generated when the fully-charged battery was discharged at a current of 12.5 A for 10 seconds at 25°C was measured, and DC resistance was calculated using Ohm's law based on the measured value. When the value measured in Example 1 was set as 100%, relative values of Examples 2 to 5 and Comparative Examples 1 to 4 were calculated and listed in Table 2 below.

(2) Initial Discharge Energy and Energy Retention Measurement

Each of the cells prepared in the examples and the comparative examples was charged at 0.2 C to 3.8 V at 25°C, stored at 60°C for 12 hours, then charged again to 4.2 V at 25°C, and discharged to 2.5 V to perform a formation process. Next, each cell was charged at a CP (Constant Power) of 48.5 W to 4.1 V at 20°C using a charger and discharger, and was discharged at a CP of 48.5 W to 3.0 V. The above charging and discharging were set as one cycle, initial discharge energy was measured after one cycle, and energy retention relative to the initial discharge energy was then calculated while the same charging and discharging were repeated 200 times. The results thereof are listed in Table 2 below.

With respect to Comparative Examples 3 and 4, since battery specifications were different from those of Examples 1 to 5, it was not appropriate to apply the same evaluation criteria, and thus, performance evaluation was not performed.

[Table 2]

|  | Initial resistance (%) | Initial discharge energy (%) | Energy retention (%) |
|---|---|---|---|
| Example 1 | 100 | 100 | 100 |
| Example 2 | 97.311 | 99.918 | 101.743 |
| Example 3 | 95.11 | 99.765 | 100.053 |
| Example 4 | 93.399 | 99.582 | 100.317 |
| Example 5 | 94.866 | 99.653 | 101.743 |
| Comparative Example 1 | 89.976 | 99.378 | 98.225 |
| Comparative Example 2 | 88.02 | 99.378 | 98.31 |

According to the results of Table 2, in a case in which the Y value according to Equation 1 satisfied the range of 0.15 to 0.30 for the cells of Examples 1 to 5 and Comparative Examples 1 and 2 with the same 4680 specification, it may be confirmed that excellent performance was exhibited in terms of resistance and energy.

**Claims**

1. A lithium secondary battery comprising:

   an electrode assembly including a positive electrode, a negative electrode, and a separator disposed between the positive electrode and the negative electrode; an electrolyte including a lithium salt and an organic solvent; and a battery case accommodating the electrode assembly and the electrolyte,
   wherein the organic solvent comprises dimethyl carbonate, and
   a Y value defined by Equation 1 is in a range of 0.15 to 0.30:

   [Equation 1]

   $$Y = \frac{1}{FF} \times \frac{E}{V_{CH4}} \times \frac{r_{DMC}}{C}$$

   wherein, in Equation 1,
   FF is a ratio of a diameter to a height of the battery case,
   E is a residual amount of the electrolyte which is measured in g,
   $r_{DMC}$ is a weight ratio of the dimethyl carbonate to a total weight of the solvent in the electrolyte,
   $V_{CH4}$ is a volume of $CH_4$ gas present in the lithium secondary battery which is measured in mL, and
   C is discharge capacity measured in Ah when the lithium secondary battery is charged and discharged at 0.5 C in a range of 2.5 V to 4.2 V,
   wherein Y is a dimensionless number.

2. The lithium secondary battery of claim 1, wherein a ratio of the volume of the $CH_4$ gas to a total volume of gas present in the lithium secondary battery is in a range of 0.40 to 0.80.

3. The lithium secondary battery of claim 1, wherein the residual amount of the electrolyte is in a range of 25 g to 32 g.

4. The lithium secondary battery of claim 1, wherein, when the lithium secondary battery is charged and discharged at 0.5 C in the range of 2.5 V to 4.2 V, the discharge capacity is in a range of 10 Ah to 50 Ah.

5. The lithium secondary battery of claim 1, wherein the weight ratio of the dimethyl carbonate to the total weight of the solvent in the electrolyte is in a range of 0.60 to 0.90.

6.  The lithium secondary battery of claim 1, wherein the electrolyte comprises at least one additive selected from the group consisting of vinylene carbonate, 1,3-propane sultone, succinonitrile, and methyl propargyl carbonate.

7.  The lithium secondary battery of claim 1, wherein the lithium secondary battery is a cylindrical type battery having a form factor ratio, which is the ratio of the diameter to the height of the battery case, of 0.4 or more.

8.  The lithium secondary battery of claim 1, wherein the lithium secondary battery is a 46110 cell, a 48110 cell, a 4880 cell, or a 4680 cell.

9.  The lithium secondary battery of claim 1, wherein the lithium secondary battery comprises a non-coating portion in which an active material layer is not formed on at least a portion of the positive electrode and the negative electrode, and
    the positive electrode non-coating portion or the negative electrode non-coating portion is defined as an electrode tab.

10. The lithium secondary battery of claim 9, wherein the positive electrode non-coating portion and the negative electrode non-coating portion are formed along a winding direction of the electrode assembly on one side ends of the positive electrode and the negative electrode, respectively, a current collecting plate is bonded to each of the positive electrode non-coating portion and the negative electrode non-coating portion, and the current collecting plate is connected to an electrode terminal.

11. The lithium secondary battery of claim 9, wherein the positive electrode non-coating portion and the negative electrode non-coating portion are processed in a form of a plurality of independently bendable segments, and
    at least a portion of the plurality of segments is bent toward a winding center of the electrode assembly.

12. The lithium secondary battery of claim 11, wherein the at least a portion of the plurality of bent segments is overlapped on an upper end and a lower end of the electrode assembly, and the current collecting plate is bonded to the overlapped plurality of segments.

13. A battery pack comprising the lithium secondary battery of claim 1 as a unit cell.

[FIG. 1]

**WINDING DIRECTION**

[FIG. 2]

[FIG. 3]

[FIG. 4]

[FIG. 5]

[FIG. 6]

## INTERNATIONAL SEARCH REPORT

| International application No. |
| --- |
| **PCT/KR2024/020825** |

| A. | CLASSIFICATION OF SUBJECT MATTER |
| --- | --- |

**H01M 10/052**(2010.01)i; **H01M 10/0566**(2010.01)i; **H01M 4/70**(2006.01)i; **H01M 50/538**(2021.01)i; **H01M 50/533**(2021.01)i

According to International Patent Classification (IPC) or to both national classification and IPC

| B. | FIELDS SEARCHED |
| --- | --- |

Minimum documentation searched (classification system followed by classification symbols)

H01M 10/052(2010.01); H01M 10/0525(2010.01); H01M 10/0567(2010.01); H01M 4/58(2010.01); H01M 50/107(2021.01); H01M 50/213(2021.01); H01M 50/533(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지 (lithium secondary battery), 전해질 (electrolyte), 유기용매 (organic solvent), 디메틸 카보네이트 (dimethyl carbonate, DMC), 원통형 전지 (cylindrical battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0058304 A (LG ENERGY SOLUTION, LTD.) 03 May 2023 (2023-05-03)<br>See abstract; paragraph [0212]; and claims 1 and 28. | 1-13 |
| A | KR 10-2014-0067223 A (SK INNOVATION CO., LTD.) 05 June 2014 (2014-06-05)<br>See abstract; and claims 1-13. | 1-13 |
| A | KR 10-2014-0081467 A (SAMSUNG SDI CO., LTD.) 01 July 2014 (2014-07-01)<br>See abstract; paragraphs [0061]-[0066]; and claims 1, 9 and 12. | 1-13 |
| A | KR 10-2023-0053534 A (LG ENERGY SOLUTION, LTD.) 21 April 2023 (2023-04-21)<br>See abstract; paragraphs [0023] and [0024]; and figures 3-5. | 1-13 |
| A | KR 10-2013-0060362 A (SHIN-KOBE ELECTRIC MACHINERY CO., LTD.) 07 June 2013 (2013-06-07)<br>See abstract; and claims 1-6. | 1-13 |

☐ Further documents are listed in the continuation of Box C.　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 March 2025** | **28 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 765 281 A1

<table>
<thead>
<tr><th colspan="2">INTERNATIONAL SEARCH REPORT<br>Information on patent family members</th><th colspan="2">International application No.<br>**PCT/KR2024/020825**</th></tr>
</thead>
</table>

| Patent document cited in search report | | Publication date (day/month/year) | Patent family member(s) | | | Publication date (day/month/year) |
|---|---|---|---|---|---|---|
| KR | 10-2023-0058304 A | 03 May 2023 | CA | 3235579 | A1 | 27 April 2023 |
| | | | CN | 116806373 | A | 26 September 2023 |
| | | | EP | 4386887 | A1 | 19 June 2024 |
| | | | JP | 2024-509211 | A | 29 February 2024 |
| | | | US | 2024-0421359 | A1 | 19 December 2024 |
| | | | WO | 2023-068900 | A1 | 27 April 2023 |
| KR | 10-2014-0067223 A | 05 June 2014 | KR | 10-1970725 | B1 | 22 April 2019 |
| KR | 10-2014-0081467 A | 01 July 2014 | KR | 10-1895903 | B1 | 07 September 2018 |
| | | | US | 2014-0178749 | A1 | 26 June 2014 |
| | | | US | 9356283 | B2 | 31 May 2016 |
| KR | 10-2023-0053534 A | 21 April 2023 | CN | 118104037 | A | 28 May 2024 |
| | | | EP | 2626943 | A4 | 30 April 2014 |
| | | | EP | 4418398 | A1 | 21 August 2024 |
| | | | JP | 2024-537303 | A | 10 October 2024 |
| | | | JP | 5630189 | B2 | 26 November 2014 |
| | | | US | 2013-0189591 | A1 | 25 July 2013 |
| | | | WO | 2023-063779 | A1 | 20 April 2023 |
| KR | 10-2013-0060362 A | 07 June 2013 | CN | 103125042 | A | 29 May 2013 |
| | | | EP | 2626943 | A1 | 14 August 2013 |
| | | | JP | 2012-079604 | A | 19 April 2012 |
| | | | JP | 5630189 | B2 | 26 November 2014 |
| | | | US | 2013-0189591 | A1 | 25 July 2013 |
| | | | WO | 2012-046514 | A1 | 12 April 2012 |

Form PCT/ISA/210 (patent family annex) (July 2022)

26